# EUROPEAN PATENT SPECIFICATION

(11) **EP 1 102 366 B1**
(45) Date of publication and mention of the grant of the patent: **09.08.2006**
(21) Application number: 00124070.4
(22) Date of filing: 06.11.2000
(51) Int. Cl.: H01R 43/00, B65G 47/14

(54) **Seal grommet feeder for a harness making machine**
Abdichtungsstation für Kabelbaum herstellende Maschine
Poste de traitement de joints pour machine à fabriquer des harnais de câbles

(30) Priority: 18.11.1999 EP 99811066
(43) Date of publication of application: 23.05.2001
(73) Proprietor: Komax Holding AG, 6036 Dierikon (CH)
(72) Inventor: Daugy, Bruno, 83470 St. Maxim (FR); Celoudoux, Jean Paul, 13100 Aix en Provence (FR)
(74) Representative: Blöchle, Hans

(56) References cited:
- US-A- 4 282 964
- US-A- 5 155 895
- US-A- 5 926 947

## Description

This invention relates to a seal grommet feeder of a seal processing station of a harness making machine.

A seal processing station of a harness making machine is described in International application WO9708787 which discloses a device according to the preamble of claim 1. In this application a seal processing station for a harness making machine is shown comprising a seal sorting and feeding unit that feeds single wire seal grommets on a feed track which carries the seal grommets to an insertion device. The insertion device positions the seal grommets over the end of an electrical or optical wire for the purpose of sealing the wire end, which may be terminated to a terminal, in a connector housing. The feed track is mounted on a vibrator unit, whereby vibration is such that the grommets are fed from the seal sorting unit to the insertion device, along the feed track. The feed track has a groove within which a narrow portion of the grommet is received, such that the central axis of the grommet (i.e. the axis at the center of the hole extending through the grommet) is substantially perpendicular to the direction of the feed track. Single wire grommets typically have one or more radial sealing lips of a greater diameter than the narrow portion received in the groove of the feed track.

In order to position the grommets on the vibrating feed track, such that the smaller end inserts into the groove of the feed track and the grommet is oriented with its axis of a rotation perpendicular to the feed track direction, grommets are randomly dropped on the vibrating feed track whereby some grommets fall off, some grommets orient themselves correctly in the groove of the feed track and others remain on the feed track incorrectly oriented. In order to feed only correctly oriented grommets on the feed track, at or proximate the exit of the feed track from the seal sorting unit a jet of air is blown across the feed track through a nozzle arranged adjacent the feed track above the groove. The jet of air blows off incorrectly oriented grommets.

The air pressure of the nozzle must be finely tuned in order to ensure that the air pressure is sufficient to blow off all incorrectly oriented grommets, but not any correctly oriented grommets. The sensitivity of adjustment increases with grommet shapes that are "top-heavy". The inventor of the invention described hereinafter, realised that the problem of blowing correctly oriented seals off the feed track increases with higher feed rates, and may even become the limiting factor in reducing cycle times of harness making machines.

It is an object of this invention to provide a reliable grommet feeding device that can operate at high speed, and with a variety of different grommet designs, some of which may be particularly top heavy.

Objects of this invention have been achieved by providing the seal grommet feeding device according to claim 1. Disclosed herein is a seal grommet feeding device for feeding seal grommets having a substantially axisymmetric shape extending along a center axis between first and second ends, the feeding device comprising a feed track having a groove for receiving the first end of the grommet therein, the device further comprising an air propulsion member blowing a jet of air across the feed track for removing incorrectly oriented seal grommets off the feed track, wherein substantially at the position of the air jet with respect to the direction along the feed track, the device comprises a retention shoulder for abutment of the second end of the seal grommet thereagainst, the retention shoulder positioned above the feed track with a spacing sufficient to allow passage of incorrectly oriented seal grommets therethrough. Advantageously therefore, correctly oriented grommets, even particularly top heavy once are not blown of the feed track due to engagement with the upper ends thereof against the retention shoulder, whereas incorrectly oriented seal grommets are blown through the spacing beneath the retention shoulder. The air propulsion device may comprise nozzle provided in an extension of one side wall of the feed track. The nozzle may be positioned between the top of the feed track groove and retention shoulder such that the air jet blows into the space therebetween.

Further advantageous aspects of the invention will be set forth in the claims, or will be apparent from the following description and drawings.

An embodiment of this invention will now be described by way of example with reference to the figures in which;
Figure 1 is a cross section of part of a conventional seal grommet feeding device showing a seal grommet correctly oriented on a feed track;
Figure 2 is view similar to figure 1 showing a seal grommet incorrectly oriented on the feed track;
Figure 3 is a cross sectional view through part of a seal grommet feeding device according to this invention, showing a seal grommet positioned in a feeding track thereof in the correct orientation;
Figure 4 is a cross sectional view similar to figure 3 showing a seal grommet incorrectly oriented on the feeding track;
Figure 5 is a perspective view of a portion of a grommet feeding device according to this invention.

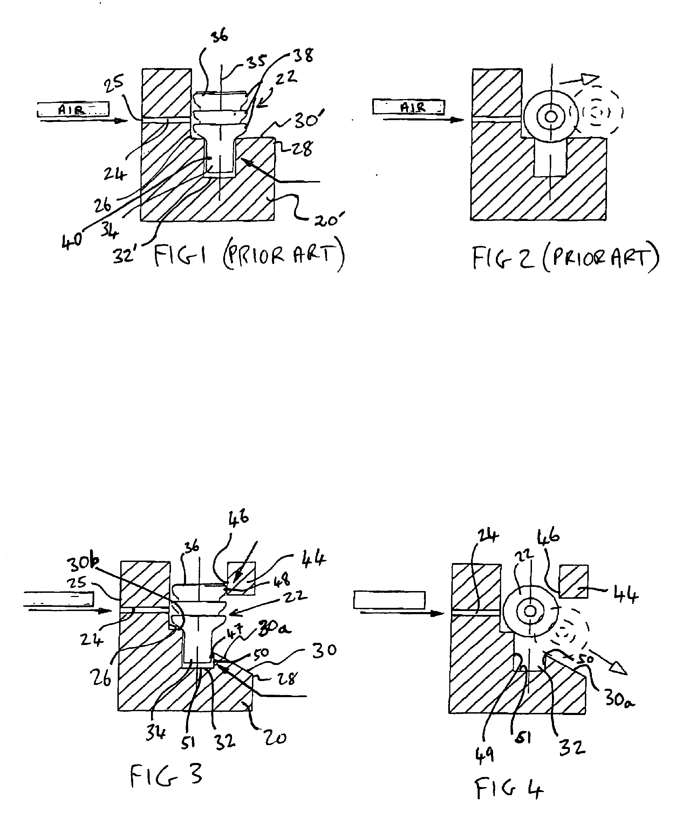

Referring to figures 1 and 2, a cross section through part of a seal grommet feeding device is shown, the device comprising a feed track 20' that is mounted on a vibrator that oscillates the feed track in such a manner as to feed seal grommets 22 therealong from a seal sorting unit to an assembly or insertion apparatus for mounting the seal grommet on a wire end. These elements are well known in the art and are for example described in International application WO9708787. The feed track is provided with an air jet system which in this embodiment comprises one or more nozzles 24 connected at an outer end 25 to a compressed air source for blowing a jet of air across the feed track 20' from one side 26 thereof towards an opposite side 28. The nozzle 24 is positioned at a certain height above the top surface 30' of the feed track 20' such that grommets 22 fed therepast intersect the air jet. The feed track 20' is further provided with a groove 32' recessed from the top wall or surface 30' and receives a first end 34 of the grommets 22 therein.

Grommets may have various shapes and sizes, but typically have an axisymmetric (or revolution) shape about a central axis 35, extending from the first end 34 to a second end 36 and comprising a plurality of radial sealing lips 38 proximate second end 36 and a smaller diameter portion 40 proximate the first end 34. The seal grommet is further provided with a central bore for receiving a wire therethrough in the direction of the axis 35. The groove 32' of the sealing track 20' is adapted to receive the narrow diameter portion 40 proximate the first end 34 of the grommet therein.

As is known in prior seal sorting units, seal grommets 22 are randomly dropped on a portion of the vibrator feed track 20', whereby certain grommets fall off, others orient themselves correctly on the feed track (i.e. with their first ends 34 in the groove 32' and the axis 35 substantially perpendicular to the feed track direction) whereas some grommets may be incorrectly oriented (for example upside-down with relation to the orientation of figure 1 or laying on their sides as illustrated in figure 2). In prior systems, as the grommets pass the air jet, incorrectly oriented grommets are toppled or blown off the feed tack 20' as illustrated in figure 2. Correctly oriented grommets as shown in figure 1, are normally held in the feed track 20' by engagement of the first end 34 in the groove 32'. The pressure of the air however has to be tuned very accurately in order to prevent correctly oriented grommets 22 from being blown off. The problem is worsened with grommets that are top heavy, in that there are many radial sealing lips that extend high above the narrow first end portion 40, or are of a diameter much larger than the narrow portion.

As the feed rate increases in order to reduce cycle times of the harness making machine, the vibration of the feed track is enhanced thereby making the seals jump along the feed track in a more pronounced manner, which increases the chances of correctly oriented seal grommets from being blown off the feed track. This effect, which has being recognised by the inventor, can be very disadvantageous as the speed of the harness making machine may be limited.

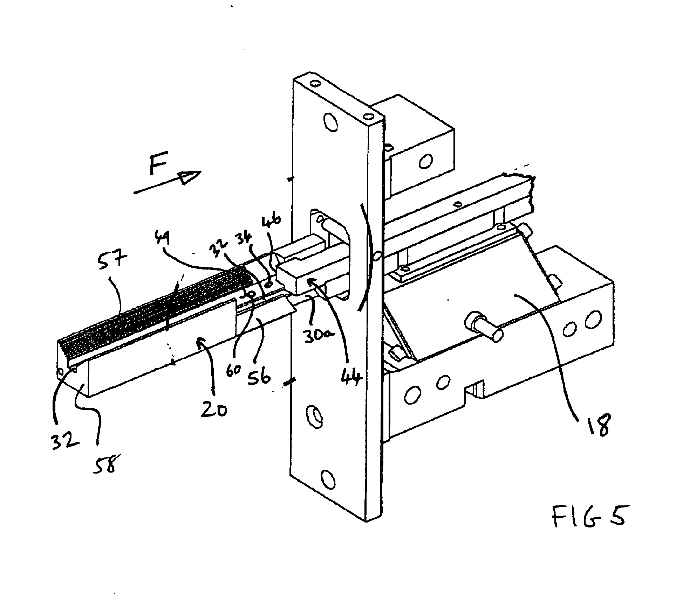

Referring to figures 3, 4 and 5, cross sections and a perspective view of a grommet feeding device according to this invention is shown whereby in figure 3 the seal grommet 22 is shown correctly oriented and in figure 2 the seal grommet is incorrectly oriented on the feed track 20. In figure 5 a portion of the feed track 20 is shown in perspective, the feed track mounted on a vibrator 18 and projecting into a seal sorting unit at an end 58. As best seen in figure 4, an incorrectly oriented grommet 22 is ejected by the air jets through the space between the recessed top wall 30a portion and retention member 44. The seal grommet in these figures has the same characteristics as the previously described seal grommet and will not be described again. The air propulsion system may be substantially similar to a conventional air propulsion system with a nozzle 24 receive compressed air therethrough and feeding it from one side 26 towards an opposed side 28 of the feed track 20. The nozzle 24 is similarly positioned at a certain height above a top wall 30 of the feed track. Similarly a groove 32 is recessed from the top wall 30 and receives the first end 34 of the grommet therein.

The grommet feeding device according to this invention further comprises a retaining wall 44 on the side 28 of the feed track opposite the nozzle 24, thereby providing a retention shoulder 46 against which the seal grommet 22 proximate the second end 36 abuts. A correctly oriented seal grommet as shown in figure 3 is thus supported at first and second radial points 47, 48 proximate the first and second ends 34, 36 respectively, against a side wall 50 of the groove 32 and the retention shoulder 46 respectively. A higher pressure air jet, in comparison to prior solutions, can thus be provided, or with a lesser requirement for fine tuning, in addition to the ability to vibrate the feed track at higher frequency and amplitude in order to increase the feed rate of the grommets therealong. The upper surface 30 of the feed track 20 along a portion where the retention shoulder 46 is provided, is at a reduced height above the bottom wall 51 of the groove 32 with respect to the upper wall portion 30b at the other side 26 where the nozzle 24 is provided, to provide a large passage for ejecting grommets.

It may be seen in figure 5 that along the feed track 20 adjacent the retention member 44 there is a lower top wall portion 56, and which is higher than the top wall portion 30a beneath the retention shoulder 46, which serves to allow surplus grommets to fall off the feed track, particularly since the end portion 58 of the feed track that projects into the seal sorting unit has a funnel or tapered top surface 57 for capturing seal grommets that are dropped thereon. A further nozzle 60 for receiving compressed air may be provided opposite the recessed portion 56 to blow off the surplus grommets, for example with lower pressure than air through the first nozzle 24.

## Claims

1. A seal grommet feeding device for feeding seal grommets having a shape extending along a center axis between first and second ends (34, 36), the feeding device comprising a feed track (20) having a groove (32) for receiving the first end of the seal grommet therein, the device further comprising an air propulsion member (24) blowing a jet of air across the feed track (20) for removing incorrectly oriented seal grommets off the feed track (20), **characterised in that** substantially at the position of the air propulsion member with respect to the direction along the feed track, the device comprises a retention shoulder (46) for abutment of a second end of the seal grommet (22) thereagainst, the retention shoulder (46) positioned above the feed track groove (32) with a spacing sufficient to allow passage of incorrectly oriented seal grommets therethrough.

## Patentansprüche

1. Durchführungsdichtungs-Zuführvorrichtung zum Zuführen von Durchführungsdichtungen mit einer Form, die sich entlang einer Mittelachse zwischen einem ersten und einem zweiten Ende (34, 36) erstreckt, wobei die Zuführvorrichtung eine Zuführschiene (20) mit einer Nut (32) zum Aufnehmen des ersten Endes der Durchführungsdichtung aufweist, wobei die Vorrichtung des Weiteren ein Luftantriebselement (24) aufweist, das einen Luftstrahl quer über die Zuführschiene (20) bläst, um falsch ausgerichtete Durchführungsdichtungen von der Zuführschiene (20) zu entfernen, **dadurch gekennzeichnet, dass** die Vorrichtung - im Wesentlichen an der Position des Luftantriebselements relativ zu der Richtung entlang der Führungsschiene - eine Rückhalteschulter (46) aufweist, gegen die ein zweites Ende der Durchführungsdichtung (22) stößt, wobei die Rückhalteschulter (46) über der Zuführschienennut (32) in einem Abstand angeordnet ist, der ausreicht, damit falsch ausgerichtete Durchführungsdichtungen dort hindurch passieren können.

## Revendications

1. Dispositif d'amenée de passe-fils isolants destiné à délivrer des passe-fils isolants ayant une forme qui s'étend le long d'un axe central entre des première et seconde extrémités (34, 36), le dispositif d'amenée comprenant un rail d'amenée (20) comportant une rainure (32) dans laquelle la première extrémité du passe-fil isolant est destinée à être reçue, et également un organe de propulsion pneumatique (24) qui projette un jet d'air transversalement au rail d'amenée (20) pour chasser hors du rail d'amenée (20) des passe-fils isolants incorrectement orientés, **caractérisé en ce que**, sensiblement au niveau de la position de l'organe de propulsion pneumatique par rapport à la direction longitudinale du rail d'amenée, le dispositif comprend un épaulement de retenue (46) contre lequel une seconde extrémité du passe-fil isolant (22) est destinée à venir en butée, l'épaulement de retenue (46) étant positionné au-dessus de la rainure (32) du rail d'amenée, avec un écartement suffisant pour permettre le passage de passe-fils isolants incorrectement orientés.
